Europäisches Patentamt

European Patent Office

Office européen des brevets

(11) Veröffentlichungsnummer: **0 297 305 B1**

(12) **EUROPÄISCHE PATENTSCHRIFT**

(45) Veröffentlichungstag der Patentschrift: **18.12.91**

(21) Anmeldenummer: **88108871.0**

(22) Anmeldetag: **03.06.88**

(51) Int. Cl.⁵: **A01N 25/04**, A01N 57/20, A01N 47/30, //(A01N57/20, 47:30,47:30,43:70,43:40,39:04, 39:02),(A01N47/30,43:70,39:04)

(54) Flüssige pestizide Mischformulierungen.

(30) Priorität: **10.06.87 DE 3719264**

(43) Veröffentlichungstag der Anmeldung:
**04.01.89 Patentblatt 89/01**

(45) Bekanntmachung des Hinweises auf die
Patenterteilung:
**18.12.91 Patentblatt 91/51**

(84) Benannte Vertragsstaaten:
**AT BE CH DE ES FR GB GR IT LI NL SE**

(56) Entgegenhaltungen:
**EP-A- 0 076 470**
**EP-A- 0 110 174**
**EP-A- 0 130 370**
**DE-A- 2 132 405**

(73) Patentinhaber: **HOECHST AKTIENGESELL-SCHAFT**
**Postfach 80 03 20**
**W-6230 Frankfurt am Main 80(DE)**

(72) Erfinder: **Albrecht, Konrad, Dr.**
**Sodener Strasse 64**
**W-6233 Kelkheim (Taunus)(DE)**
Erfinder: **Frisch, Gerhard, Dr.**
**Westerwaldstrasse 7**
**W-6393 Wehrheim(DE)**

## Beschreibung

Die vorliegende Erfindung betrifft wäßrige herbizide Mittel gemäß dem Oberbegriff des Anspruchs 1.

Bekannt sind wäßrige Dispersionsformulierungen, die einen Wirkstoff in der festen dispersen Phase und einen anderen in wassergelöster Form enthalten, beispielsweise Isoproturon und Herbizide der Phenoxy-Reihe, wie sie in der EP-A 0 130 370 beschrieben sind.

Die Anwendungsbreite dieser Formulierungen, welche durch die Zahl der enthaltenen Wirkstoffe maßgeblich bestimmt wird, ist beschränkt.

In der EP-A 0 110 174 sind pestizide Mittel in Form von Suspensionskonzentraten beschrieben, bei denen lediglich wasserunlösliche Wirkstoffe mit Hilfe von Tensiden in einer stabilen Suspension gehalten werden.

Der Erfindung liegt die Aufgabe zugrunde, neue herbizide Mittel der eingangs erwähnten Art zur Verfügung zu stellen, die über einen langen Zeitraum stabil sind.

Diese Aufgabe wird durch die kennzeichnenden Merkmale des Anspruchs 1 gelöst.

Überraschenderweise wurde nunmehr festgestellt, daß sich unter Verwendung der beanspruchten Tensidmischung Kombinationsformulierungen herstellen lassen, welche insbesondere zwei oder mehrere Wirkstoffe in der dispersen Phase und zudem noch wenigstens einen salzartigen wasserlöslichen Wirkstoff enthalten können. Infolge dieser Erweiterung der Wirkstoffkombinationsmöglichkeiten zeichnen sich die erfindungsgemäßen Fertigformulierungen durch ein sehr breites Anwendungsspektrum aus. Bei den festen dispergierten Pflanzenschutzmittelwirkstoffen handelt es sich beispielsweise um Triazine, wie Simazin, Atrazin, Cyanazin, Phenylharnstoffderivate wie beispielsweise Isoproturon, Chlortoluron, Linuron, Monolinuron, Diuron, um substituierte Pyridine wie 3,5,6-Trichlor-2-pyridyloxessigsäureester (I) bzw. 4-Amino-3,5-dichlor-6-fluor-2-pyridyloxessigsäureester (II), Ioxinil, Bromoxinil um Diphenylether wie z.B. Oxifluorfen, Triphenylzinn- und Tributylzinnverbindungen in Form des Acetats oder Hydroxids, Carbendazim, Endosulfan, Deltamethrin und Verbindungen aus der Gruppe der Triazole und Imidazole.

Als wasserlösliche Wirkstoffe seien beispielsweise genannt Salze von Phosphinothricin wie Glufosinate; Glyphosate und dessen Salze, Paraquat, Herbizide der Phenoxyreihe wie Chlormethylphenoxypropionsäure (CMPP),
2,4-Dichlorphenoxyessigsäure,
2,4-Dichlorphenoxypropionsäure,
Methylchlorphenoxyessigsäure (MCPA) sowie auch Dimethylphosphinoylhydroxyessigsäure oder deren Salze, 3-Isopropyl-(1H)-benzo-2,1,3-benzo thiadiazin-4-on-2,2-dioxid und 1,1-Dimethyl-4,4'-bipyridiniumdichlorid. Als Salze können alle in der Landwirtschaft einsetzbaren Salze verwendet werden. Dabei handelt es sich bevorzugt um Alkali-, Erdalkali- oder ein- bis dreifach substituierte Ammoniumsalze. Bei den letzteren können die Substituenten am Stickstoffatom unabhängig voneinander gleich oder verschieden sein. Sie bedeuten insbesondere $(C_1-C_{14})$-Alkyl (auch verzweigt), Hydroxyalkyl oder $(C_1-C_{14})$-Alkanoyl.

Optisch aktive Verbindungen können als reine Isomeren oder Enantiomerengemische eingesetzt werden.

Die obengenannten Pflanzenschutzmittelwirkstoffe werden fast alle in "The Pesticide Manual", 7th Ed., British Crop Protection Council (1983) beschrieben
Dimethylphosphinoylhydroxyessigsäure ist aus DE-OS 32 38 958 bekannt.

Die erfindungsgemäße Tensidmischung, die es erlaubt, einen, vor allem aber zwei oder mehrere zu dispergierende feste Wirkstoffe mit mindestens einem oder mehreren wasserlöslichen Wirkstoffen zu einer flüssigen Fertigformulierung auf Wasserbasis zu kombinieren, besteht aus der Kombination von Alkylethersulfaten mit ethoxilierten Fettalkoholen und Sulfobernsteinsäurehalbestern.

Hierbei sind unter den Alkylethersulfaten solche mit einer Kettenlänge von $C_{10}-C_{18}$, speziell Lauryl, und einem Ethoxilierungsgrad von 1-5 EO-Einheiten, speziell 2-3 EO-Einheiten, in Form ihrer Alkali-, Erdalkali- oder Ammoniumsalze zu verstehen, wobei letztere wie oben beschrieben substituiert sein können. Ein spezielles Beispiel für ein Alkylethersulfat-Tensid ist ®Genapol LRO der Hoechst AG.

Als ethoxilierte Fettalkohole kommen Alkohole mit einer Kettenlänge von $C_8-C_{20}$, speziell im Mittel $C_{13}$, und einem Ethoxilierungsgrad von 5-30 EO-Einheiten, speziell 5-13 EO, in Frage, wie sie beispielsweise unter dem Namen ®Genapol x-Reihe der Hoechst AG im Handel sind.

Das hier verwendete Sulfobernsteinsäurehalbester-Alkalisalz (HOE S 1728) wird in der DE-PS 21 32 405 beschrieben. Die Herstellung erfolgt durch Umsetzung eines Polyglykolethers eines Kondensationsproduktes von einem Monooctyl- oder Monononylphenol und Formaldehyd bei einem Molverhältnis Alkylphenol zu Formaldehyd von 2:1 bis 10:9, der 2 bis 8 Mol Alkylenoxideinheiten pro Mol Alkylphenol enthält, mit Maleinsäureanhydrid und einem Alkalisulfit.

Dieser Tensidmischung können noch Verdicker organischer oder anorganischer Art, wie solche auf

2

Basis von Xanthan-Derivaten oder Alumosilikaten, zur Viskositätserhöhung zugegeben werden. Ebenso können diese auf der Basis der beschriebenen Tensidmischung hergestellten Fertigformulierungen noch Entschäumer, beispielsweise auf Siliconbasis, und auch Frostschutzmittel auf Harnstoff- oder Polyolbasis enthalten.

Die Tensidmischung besteht im allgemeinen aus 0,2-20 Gew.-%, vorzugsweise 0,5-15 %, Alkylethersulfat, 0,1-6 Gew.-%, vorzugsweise 0,1-3 %, ethoxiliertem Fettalkohol und 1-20 Gew.-% Sulfobernsteinsäurehalbester-Alkalisalz. In der Fertigformulierung können zudem 1-70 Gew.-% an Wirkstoffen enthalten sein. Das Verhältnis der Wirkstoffe in der feindispersen Phase zu den in Wasser gelösten Wirkstoffen wird von der biologischen Wirkungsweise bestimmt, kann aber zwischen 100:1 und 1:100, vorzugsweise jedoch zwischen 20:1 und 1:20, liegen.

Die Herstellung der erfindungsgemäßen Formulierungen kann auf verschiedene Weise erfolgen. Zum einen kann man so vorgehen, daß man die einzelnen Bestandteile in Form von Einzeldispersionen und Lösungen herstellt und diese dann unter Verwendung einer Kolloidmühle mischt. Ebenso ist es möglich, die Wirkstoffe der feindispersen Phase zusammen zu vermahlen und dieser Mischdispersion auf die oben geschilderte Weise die Wirkstofflösung zuzusetzen. Prizipiell kann man auch alle Wirkstoffe in einem Durchgang zur gewünschten Mischformulierung verarbeiten. Die beiden zuletzt geschilderten Verfahren können bezüglich der Partikelgleichheit der feindispersen Wirkstoffe Probleme bringen, da diese Wirkstoffe verschieden gut vermahlbar sein können.

Die auf diese Weise hergestellten Kombinationsformulierungen sind lagerstabil, zeigen nahezu keine chemischen Veränderungen und sind anwendungstechnisch einfach zu handhaben.

Die hier beschriebene Tensidkombination läßt sich natürlich auch für Systeme verwenden, in denen nur ein Wirkstoff in der feindispersen Phase und ein Wirkstoff in der Lösung vorliegt.

In der nachfolgenden Tabelle sind Beispiele aufgeführt, die das erfindungsgemäße Verfahren näher erläutern sollen:

| Bsp.-Nr. Zusammensetzung [Gew.-%] | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|
| Alkyl-ethersulfat | 12 | 13 | 1 | 1 | 0,5 | 15 | 10 | 11 | 8 | 8 | 12 | 7 | 8 | 2 | 12 | 10 | 13 | 11 | 10 | 7 | 20 | 10 | 5 | 8 |
| Ethoxilierter Fettalkohol | 0,5 | 0,5 | 0,5 | 0,5 | 1 | 0,5 | 0,5 | 0,5 | 0,5 | 0,5 | 0,5 | 2,0 | 0,7 | 0,7 | 0,5 | 0,5 | 0,5 | 0,5 | 0,5 | 0,7 | 3 | 0,8 | 0,9 | 0,7 |
| HOE S 1728 | 13 | 11 | 12 | 13 | 17 | 10 | 13 | 13 | 10 | 11 | 14 | 14 | 10 | 15 | 7 | 7 | 11 | 10 | 12 | 10 | 5 | 12 | 12 | 10 |
| Diuron | 17 | 15 | 16 | 15 | 21 | | 17 | 17 | 20 | | 16 | 8 | 2 | 10 | 30 | | 15 | 15 | 14,5 | 3 | | 15 | 21 | 14 |
| Chlortoluron | | | | | | | | | | 6 | | | | | | | | | | | | | | |
| Isoproturon | | | | | | | | | 5 | | | | | | | | | | | | | | | |
| Atrazin | | | | | | | 10 | | | | | | | | | | | | | | | | | |
| Cyanazin | | | | | | | | 11 | | | | | | | | | | | | | | | | |
| Simazin | 11 | 10 | 11 | 11 | 15 | 8 | | | | | 15 | 10 | 20 | 15 | 15 | | 26 | 10 | | 15 | | 10 | 15 | 10 |
| Glyphosate | | | | | | | | | | | 8 | 6 | | | | | | | | | | | | |

**Fortsetzung**

| Bsp.-Nr.<br>Zusammensetzung [Gew.-%] | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|
| III | | | | | | | | | | | | | | | | | 8 | | | | | | | |
| MCPA | | | | | | | | | | | | | 12 | 11,5 | | | | | | | | | | |
| Monolinuron | | | | | | 15 | | | | | | | | | | | | | | | 5 | | | |
| I | | | | | | | | | | | | | | | | | | 4 | | | | | | |
| II | | | | | | | | | | | | | | | | | | | 4 | | | | | |
| CMPP | | | | | | | | | | | | | | | | | | | | 11,5 | | | | |
| Linuron | | | | | | | | | | | | | | | | | | | | | 20 | | | |
| Glufosinate | 9 | 8 | 8,5 | 11 | 13 | 11 | 9 | 10 | 8 | | | | 7,5 | | 8 | 7 | 8 | | 8,5 | 7 | 15 | 12 | 13 | 7 |
| Wasser ad 100 % | | | | | | | | | | | | | | | | | | | | | | | | |

I = 3,5,6-Trichlor-2-pyridyloxyessigsäureester

II = 4-Amino-3,5-dichlor-6-fluor-2-pyridyloxyessigsäureester

III = Dimethylphosphinoylhydroxyessigsäure

## Patentansprüche

1. Wäßrige herbizide Mittel mit wenigstens einem Wirkstoff in disperser Form, wenigstens einem wasserlöslichen Wirkstoff und Sulfobernsteinsäurehalbester als Tensid, gekennzeichnet durch Alkylethersulfate und ethoxylierte Fettalkohole als weitere Tenside.

2. Mittel gemäß Anspruch 1, dadurch gekennzeichnet, daß sie 2 Wirkstoffe in disperser Form und 1 Wirkstoff in wasserlöslicher Form enthalten.

3. Mittel gemäß Anspruch 1 oder 2, dadurch gekennzeichnet, daß sie $(C_{10}-C_{18})$-Alkylethersulfate mit einem Ethoxilierungsgrad von 1-5 EO-Einheiten in Form ihrer Alkali-, Erdalkali- oder Ammoniumsalze und ethoxilierte Fettalkohole der Kettenlänge $C_8-C_{20}$ mit einem Ethoxilierungsgrad von 5-30 EO-Einheiten enthalten.

4. Mittel gemäß einem oder mehreren der Ansprüche 1-3, dadurch gekennzeichnet, daß sie als Tensidkomponente ein Sulfobernsteinsäurehalbester-Alkalisalz enthalten.

5. Mittel gemäß einem oder mehreren der Ansprüche 1-4, dadurch gekennzeichnet, daß sie ein Alkylethersulfat der Kettenlänge $C_{12}$ und einen ethoxilierten Fettalkohol der Kettenlange $C_{13}$ enthalten.

6. Mittel gemäß einem oder mehreren der Ansprüche 1-5, dadurch gekennzeichnet, daß sie 0,2-20 Gew.-% Alkylethersulfat, 0,1-6 Gew.-% ethoxylierten Fettalkohol und 1-20 Gew.-% Sulfobernsteinsäurehalbester-Alkalisalz und 1-70 Gew.-% Wirkstoffe enthalten.

7. Mittel gemäß einem oder mehreren der Ansprüche 1-6. dadurch gekennzeichnet, daß sie 0,5-15 Gew.-% Alkylethersulfat, 0,1-3 Gew.-% ethoxylierten Fettalkohol und 5-15 % Sulfobernsteinsäurehalbester-Alkalisalz enthalten.

8. Mittel gemäß einem oder mehreren der Ansprüche 1-7, dadurch gekennzeichnet, daß das Verhältnis der Wirkstoffe in der dispersen Phase zu den in Wasser gelösten Wirkstoffen zwischen 100:1 und 1:100, vorzugsweise 20:1 und 1:20, schwanken kann.

9. Mittel gemäß einem oder mehreren der Ansprüche 1-8, dadurch gekennzeichnet, daß sie als Wirkstoffe Diuron, Chlortoluron, Isoproturon, Atrazin, Cyanazin, Simazin, Linuron, Monolinuron, Glyphosate, Glufosinate, Dimethylphosphinoylhydroxyessigsäure, 2,4-Dichlorphenoxyessigsäure, 2,4-Dichlorphenoxypropionsäure, Methylchlorphenoxyessigsäure und Chlormethylphenoxypropionsäure oder deren für die Landwirtschaft einsetzbaren Salze enthalten.

**Patentanspruche für folgenden Vertragsstaat : ES**

1. Verfahren zur Bekämpfung von unerwünschtem Pflanzenwuchs, dadurch gekennzeichnet, daß man auf die Pflanzen oder die Kulturflächen wäßrige pestizide Mittel auf der Basis von wirkstoffhaltigen Dispersionen in Kombination mit wasserlöslichen Wirkstoffen, welche mindestens 3 Wirkstoffe enthalten, von denen mindestens 2 Wirkstoffe in disperser Form vorliegen und mindestens 1 Wirkstoff wasserlöslich ist, und welche als Tenside eine Kombination von Alkyethersulfaten mit ethoxilierten Fettalkoholen und Sulfobernsteinsäurehalbestern enthalten, appliziert.

2. Verfahren gemäß Anspruch 1, dadurch gekennzeichnet, daß die 2 Wirkstoffe in disperser Form und 1 Wirkstoff in wasserlöslicher Form enthalten.

3. Verfahren gemäß Anspruch 1 oder 2, dadurch gekennzeichnet, daß die Mittel $(C_{10}-C_{18})$-Alkylethersulfate mit einem Ethoxilierungsgrad von 1-5 EO-Einheiten in Form ihrer Alkali-, Erdalkali-oder Ammoniumsalze und ethoxilierte Fettalkohole der Kettenlänge $C_8-C_{20}$ mit einem Ethoxilierungsgrad von 5-30 EO-Einheiten enthalten.

4. Verfahren gemäß einem oder mehreren der Ansprüche 1-3, dadurch gekennzeichnet, daß die Mittel als Tensidkomponente ein Sulfobernsteinsäurehalbester-Alkalisalz enthalten.

5. Verfahren gemäß einem oder mehreren der Ansprüche 1-4, dadurch gekennzeichnet, daß die Mittel ein Alkylethersulfat der Kettenlänge $C_{12}$ und einen ethoxilierten Fettalkohol der Kettenlänge $C_{13}$ enthalten.

6. Verfahren gemäß einem oder mehreren der Ansprüche 1-5, dadurch gekennzeichnet, daß die Mittel 0,2-20 Gew.-% Alkylethersulfat, 0,1-6 Gew.-% ethoxylierten Fettalkohol und 1-20 Gew.-% Sulfobernsteinsäurehalbester-Alkalisalz und 1-70 Gew.-% Wirstoffe enthalten.

7. Verfahren gemäß einem oder mehreren der Ansprüche 1-6, dadurch gekennzeichnet, daß die Mittel 0,5-15 Gew.-% Alkylethersulfat, 0,1-3 Gew.-% ethoxylierten Fettalkohol und 5-15 % Sulfobernsteinsäurehalbester-Alkalisalz enthalten.

8. Verfahren gemäß einem oder mehreren der Ansprüche 1-7, dadurch gekennzeichnet, daß in den Mitteln das Verhältnis der Wirkstoffe in der dispersen Phase zu den in Wasser gelösten Wirkstoffen zwischen 100:1 und 1:100, vorzugsweise 20:1 und 1:20, schwanken kann.

9. Verfahren gemäß einem oder mehreren der Ansprüche 1-8, dadurch gekennzeichnet, daß die Mittel als Wirkstoffe Diuron, Chlortoluron, Isoproturon, Atrazin, Cyanazin, Simazin, Linuron, Monolinuron, Glyphosate, Glufosinate, Dimethylphosphinoylhydroxyessigsäure, 2,4-Dichlorphenoxyessigsäure, 2,4-Dichlorphenoxypropionsäure, Methylchlorphenoxyessigsäure und Chlormethylphenoxypropionsäure oder deren für die Landwirtschaft einsetzbaren Salze enthalten.

## Claims

1. An aqueous herbicidal agent having at least one active substance in the disperse form, at least one water-soluble active substance and sulfosuccinic monoester as surfactant, containing alkyl ether sulfates and ethoxylated fatty alcohols as further surfactants.

2. An agent as claimed in claim 1, which contains 2 active substances in the disperse form and 1 active substance in the water-soluble form.

3. An agent as claimed in claim 1 or 2, which contains $(C_{10}-C_{18})$-alkyl ether sulfates having an ethoxylation degree of 1-5 EO units in the form of their alkali metal, alkaline earth metal or ammonium salts and ethoxylated fatty alcohols of chain length $C_8-C_{20}$ having an ethoxylation degree of 5-30 EO units.

4. An agent as claimed in one or more of claims 1-3, which contains a sulfosuccinic monoester alkali metal salt as the surfactant component.

5. An agent as claimed in one or more of claims 1-4, which contains an alkyl ether sulfate of chain length $C_{12}$ and an ethoxylated fatty alcohol of chain length $C_{13}$.

6. An agent as claimed in one or more of claims 1-5, which contains 0.2-20% by weight of alkyl ether sulfate, 0.1-6% by weight of ethyoxylated fatty alcohol, 1-20% by weight of sulfosuccinic monoester alkali metal salt and 1-70% by weight of active substances.

7. An agent as claimed in one or more of claims 1-6, which contains 0.5-15% by weight of alkyl ether sulfate, 0.1-3% by weight of ethoxylated fatty alcohol and 5-15% of sulfosuccinic monoester metal salt.

8. An agent as claimed in one or more of claims 1-7, wherein the ratio of active substances in the disperse phase to the active substances dissolved in water may range from 100:1 to 1:100, preferably 20:1 to 1:20.

9. An agent as claimed in one or more of claims 1-8, which contains diuron, chlortoluron, isoproturon, atrazine, cyanazine, simazine, linuron, monolinuron, glyphosate, glufosinate, dimethylphosphinoylhydroxyacetic acid, 2,4-dichlorophenoxyacetic acid, 2,4-dichlorophenoxypropionic acid, methylchlorophenoxyacetic acid and chloromethylphenoxypropionic acid or their salts which can be employed in agriculture, as the active substances.

## Claims for the following Contracting State : ES

1. A method for controlling undesirable plant growth, wherein an aqueous pesticidal agent based on an active substance-containing dispersion in combination with water-soluble active substances is applied to the plants or cultivated areas, which agent contains at least 3 active substances, at least 2 of which are present in the disperse form and at least 1 of which is water-soluble, and contains alkyl ether sulfates combined with ethoxylated fatty alcohols and sulfonsuccinic monoesters as the surfactants.

2. The method as claimed in claim 1, wherein the agent contains 2 active substances in the disperse form and 1 active substance in the water-soluble form.

3. The method as claimed in claim 1 or 2, wherein the agent contains $(C_{10}-C_{18})$-alkyl ether sulfates having an ethoxylation degree of 1-5 EO units in the form of their alkali metal, alkaline earth metal or ammonium salts and ethoxylated fatty alcohols of chain length $C_8-C_{20}$ having an ethoxylation degree of 5-30 EO units.

4. The method as claimed in one or more of claims 1-3, wherein the agent contains a sulfosuccinic monoester alkali metal salt as the surfactant component.

5. The method as claimed in one or more of claims 1-4, wherein the agent contains an alkyl ether sulfate of chain length $C_{12}$ and an ethoxylated fatty alcohol of chain length $C_{13}$.

6. The method as claimed in one or more of claims 1-5, wherein the agent contains 0.2-20% by weight of alkyl ether sulfate, 0.1-6% by weight of ethoxylated fatty alcohol, 1-20% by weight of sulfosuccinic monoester alkali metal salt and 1-70% by weight of active substances.

7. The method as claimed in one or more of claims 1-6, wherein the agent contains 0.5-15% by weight of alkyl ether sulfate, 0.1-3% by weight of ethoxylated fatty alcohol and 5-15% of sulfosuccinic monoester alkali metal salt.

8. The method as claimed in one or more of claims 1-7, wherein in the agents the ratio of the active substances in the disperse phase to the active substances dissolved in water may range from 100:1 to 1:100, preferably 20:1 to 1:20.

9. The method as claimed in one or more of claims 1-8, wherein the agent contains diuron, chlorotoluron, isoproturon, atrazine, cyanazine, simazine, linuron, monolinuron, glyphosate, glufosinate, dimethylphosphinoylhydroxy-acetic acid, 2,4-dichlorophenoxyacetic acid, 2,4-dichlorophenoxypropionic acid, methylchlorophenoxyacetic acid and chloromethylphenoxypropionic acid or their salts which can be employed in agriculture, as the active substances.

**Revendications**

1. Produits herbicides aqueux renfermant au moins une matière active à l'état dispersé, au moins une matière active soluble dans l'eau et, comme surfactif, un hémi-ester de l'acide sulfosuccinique, produits caractérisés en ce qu'ils contiennent, comme surfactifs supplémentaires, des sulfates d'éthers alkyliques et des alcools gras éthoxylés.

2. Produits selon la revendication 1 caractérisés en ce qu'ils contiennent deux matières actives à l'état dispersé et une matière active soluble dans l'eau.

3. Produits selon l'une des revendications 1 et 2, caractérisés en ce qu'ils contiennent des sulfates d'éthers alkyliques dont l'alkyle contient de 10 à 18 atomes de carbone et qui ont un degré d'éthoxylation de 1 à 5 motifs éthylène-oxy, sous la forme de leurs sels de métaux alcalins, de leurs sels de métaux alcalino-terreux ou de leurs sels d'ammoniums, et des alcools gras éthoxylés dont la chaîne comporte de 8 à 20 atomes de carbone et qui ont un degré d'éthoxylation de 5 à 30 motifs EO.

4. Produits selon une ou plusieurs des revendications 1 à 3, caractérisés en ce qu'ils contiennent, comme composante surfactive, un sel de métal alcalin d'un hémi-ester de l'acide sulfosuccinique.

5. Produits selon une ou plusieurs des revendications 1 à 4, caractérisés en ce qu'ils contiennent un sulfate d'éther alkylique dont l'alkyle contient 12 atomes de carbone et un alcool gras éthoxylé dont la chaîne contient 13 atomes de carbone.

6. Produits selon une ou plusieurs des revendications 1 à 5, caractérisés en ce qu'ils contiennent de 0,2 à 20% en poids d'un sulfate d'éther alkylique, de 0,1 à 6% en poids d'un alcool gras éthoxylé, de 1 à 20% en poids d'un sel de métal alcalin d'un hémi-ester de l'acide sulfosuccinique et de 1 à 70% en poids de matières actives.

7. Produits selon une ou plusieurs des revendications 1 à 6, caractérisés en ce qu'ils contiennent de 0,5 à 15% en poids d'un sulfate d'éther alkylique, de 0,1 à 3% en poids d'un alcool gras éthoxylé et de 5 à 15% en poids d'un sel de métal alcalin d'un hémi-ester de l'acide sulfosuccinique.

8. Produits selon une ou plusieurs des revendications 1 à 7, caractérisés en ce que le rapport entre les matières actives dans la phase dispersée et les matières actives dissoutes dans l'eau est compris entre 100:1 et 1:100, de préférence entre 20:1 et 1:20.

9. Produits selon une ou plusieurs des revendications 1 à 8, caractérisés en ce qu'ils contiennent, comme matières actives, du diuron, du chlortoluron, de l'isoproturon, de l'atrazine, de la cyanazine, de la simazine, du linuron, du monolinuron, du glyphosate, du glufosinate, de l'acide (diméthylphosphinoyl)-hydroxyacétique, de l'acide (dichloro-2,4 phénoxy)-acétique, de l'acide (dichloro-2,4 phénoxy)-propionique, de l'acide (méthyl-chloro-phénoxy)-acétique et de l'acide (chlorométhyl-phénoxy)-propionique, ou leurs sels utilisables en agronomie.

**Revendications pour l'Etat contractant suivant : ES**

1. Procédé pour combattre des végétaux indésirables, procédé caractérisé en ce qu'on applique sur les plantes, ou sur les surfaces de culture, des produits pesticides aqueux à base de dispersions de matières actives associées à des matières actives solubles dans l'eau, produits pesticides qui renferment au moins trois matières actives, dont au moins 2 sont à l'état dispersé et au moins 1 est soluble dans l'eau, et qui contiennent, comme surfactifs, une association de sulfates d'éthers alkyliques avec des alcools gras éthoxylés et des hémi-esters de l'acide sulfo-succinique.

2. Procédé selon la revendication 1 caractérisé en ce que les produits contiennent 2 matières actives à l'état dispersé et 1 matière active soluble dans l'eau.

3. Procédé selon l'une des revendications 1 et 2, caractérisé en ce que les produits contiennent des sulfates d'éthers alkyliques dont l'alkyle contient de 10 à 18 atomes de carbone et qui ont un degré d'éthoxylation de 1 à 5 motifs éthylène-oxy, sous la forme de leurs sels de métaux alcalins, de leurs sels de métaux alcalino-terreux ou de leurs sels d'ammoniums, et des alcools gras éthoxylés dont la chaîne comporte de 8 à 20 atomes de carbone et qui ont un degré d'éthoxylation de 5 à 30 motifs EO.

4. Procédé selon une ou plusieurs des revendications 1 à 3, caractérisé en ce que les produits contiennent, comme composante surfactive, un sel de métal alcalin d'un hémi-ester de l'acide sulfosuccinique.

5. Procédé selon une ou plusieurs des revendications 1 à 4, caractérisé en ce que les produits contiennent un sulfate d'éther alkylique dont l'alkyle contient 12 atomes de carbone et un alcool gras éthoxylé dont la chaîne contient 13 atomes de carbone.

6. Procédé selon une ou plusieurs des revendications 1 à 5, caractérisé en ce que les produits contiennent de 0,2 à 20% en poids d'un sulfate d'éther alkylique, de 0,1 à 6% en poids d'un alcool gras éthoxylé, de 1 à 20% en poids d'un sel de métal alcalin d'un hémiester de l'acide sulfosuccinique et de 1 à 70% en poids de matières actives.

7. Procédé selon une ou plusieurs des revendications 1 à 6, caractérisé en ce que les produits contiennent de 0,5 à 15% en poids d'un sulfate d'éther alkylique, de 0,1 à 3% en poids d'un alcool gras éthoxylé et de 5 à 15% en poids d'un sel de métal alcalin d'un hémiester de l'acide sulfosuccinique.

8. Procédé selon une ou plusieurs des revendications 1 à 7, caractérisé en ce que, dans les produits, le rapport entre les matières actives dans la phase dispersée et les matières actives dissoutes dans l'eau

9

est compris entre 100:1 et 1:100, de préférence entre 20:1 et 1:20.

9. Procédé selon une ou plusieurs des revendications 1 à 8, caractérisé en ce que les produits contiennent, comme matières actives, du diuron, du chlortoluron, de l'isoproturon, de l'atrazine, de la cyanazine, de la simazine, du linuron, du monolinuron, du glyphosate, du glufosinate, de l'acide (diméthylphosphinoyl)-hydroxy-acétique, de l'acide (dichloro-2,4 phénoxy)-acétique, de l'acide (dichloro-2,4 phénoxy)-propionique, de l'acide (méthyl-chloro-phénoxy)-acétique et de l'acide (chloro-méthyl-phénoxy)-propionique, ou leurs sels utilisables en agronomie.